# EUROPEAN PATENT APPLICATION

(11) **EP 2 374 627 A1**
(43) Date of publication of application: **12.10.2011**
(21) Application number: 09826072.2
(22) Date of filing: 10.11.2009
(51) Int. Cl.: B42C 15/00, B42D 3/18

(54) **METHOD AND DEVICE FOR APPLYING FILM COVER**

(30) Priority: 11.11.2008 JP 2008288373
(71) Applicant: Sanki Engineering Co., Ltd, Tokyo 103-8331 (JP); Fuji Yuatsu Seiki Co., Ltd., Gunma 379-2101 (JP)
(72) Inventor: OGUMA, Atsushi, Tokyo 103-8331 (JP); KIJIMA, Osamu, Maebashi-shi Gunma 379-2101 (JP)
(74) Representative: Prüfer & Partner GbR European Patent Attorneys
(86) International application number: PCT/JP2009/069103
(87) International publication number: WO 2010/055824

(57) **Abstract**

A film cover attaching device according to the present invention has a film cutting mechanism 200 for cutting a belt-like resin film F having adhesive agent coated on one surface thereof in conformity with the dimension of a booklet W as an attaching target, a film feeding mechanism 300 arranged to feed a cut film F to a film standby position P2, and a booklet moving mechanism 400 for moving a booklet W through a gap 402 so that the booklet W intersects with a film F arranged at the film standby position P2, and attaches the film F on the surface of the booklet W in the moving process.

## Description

### Technical Field

The present invention relates to a method for attaching a film cover to the surface of a booklet such as a book or the like, and a device for the method.

### Background Art

In order to prevent damage of a booklet such as a book or the like, a cover formed of a resin film is adhesively attached to the surface of the booklet. A film cover disclosed in Patent Document 1 is known as this type of film cover used to protect a booklet.
A work of attaching the film cover to the surface of the booklet has been hitherto performed mainly by hand. Accordingly, for example when lots of books ordered from a library are delivered to the library while film covers are adhesively attached to the books, an attaching work must be performed with assistance of many worker's hands, and this is very inefficient. Furthermore, even individual purchasers have recently increasingly required a film cover attaching service, and thus there has been a requirement of making the film cover attaching work more efficient.

### Prior Art Document

Patent Document Patent Document 1: JP-A-06-92063

### Disclosure of the Invention

### Problem to be solved by the Invention

The present invention has been implemented in view of the foregoing situation, and has an object to implement of automation of a work of attaching a resin film cover to the surface of a booklet of various sizes.

### Means of solving the Problem

In order to attain the above object, a method attaching a film cover according to the present invention is a method of disposing a resin film having adhesive agent coated on one surface thereof at a predetermined film standby position and moving a booklet so that the booklet crosses the film disposed at the film standby position, thereby attaching the film onto the surface of the booklet.

Specifically, the method of attaching a film cover according to the present invention preferably adsorbs the film disposed at the film standby position to an arrangement board having, as a gap, a place to which the booklet is moved so that a spine of the booklet intersects with the film, moves the booklet in a direction perpendicular to the surface of the film with the spine thereof being directed ahead while a content thereof is gripped and a cover sheet is unfolded in V-shape, and presses the film when the booklet passes through the gap in a moving process thereof, thereby inducing reactive force in the film against adsorption force of the arrangement board at this time, whereby the film is kept under a tension-applied state, and the film is adhesively attached to the surface of the booklet under the state.

Furthermore, according to the film cover attaching method according to the present invention, the surface of the booklet to which the film is attached may be pressed from both the sides thereof by a pair of brush rollers, and the pair of brush rollers may be rotated so as to slide in contact with the booklet in an opposite direction to a moving direction of the booklet, whereby air bubbles remaining between a cover sheet of the booklet and the film attached to the cover sheet is pushed out.

Furthermore, a film cover attaching method according to the present invention comprises:
a film cutting step for cutting a resin film having adhesive agent coated on one surface thereof on the basis of a dimension of a booklet as an attaching target;
a film arranging step for arranging the cut film at a film standby position at which a gap is provided as a place to which a spine of the booklet is moved so as to intersect; and
a film attaching step for moving the booklet so that the booklet passes through the gap while the spine of the booklet is directed ahead so as to intersect with the film arranged at the film standby position, and adhesively attaching the film to the surface of the booklet in the moving process of the booklet.

A film cover attaching device according to the present invention comprises:
a film cutting mechanism for cutting a belt-like resin film having adhesive agent coated on one surface thereof on the basis of a dimension of a booklet as an attaching target;
a film standby position at which the cut film is arranged;
a gap that is provided at an intermediate portion of the film standby position and through which the booklet is passed with a spine thereof being directed ahead so as to intersect with the film standby position;
a film feeding mechanism for feeding the cut film to the film standby position; and
a booklet moving mechanism for moving the booklet so that the booklet passes through the gap with the spine thereof being directed ahead so as to intersect with the film arranged at the film standby position, and attaching the film to the surface of the booklet in the moving process.

Here, for example, arrangement boards each having a flat surface on which the cut film is arranged are provided at both sides of the gap, and a film adsorbing mechanism for adsorbing and holding the film to the surfaces of the arrangement boards is installed.

The film cover attaching device according to the present invention is preferably configured to have a pair of brush rollers that are brought into contact with a film attached to a front cover sheet and a back cover sheet of the booklet passing through the gap while rotating.

Furthermore, the film cover attaching device according to the present invention may be configured as follows. That is, the film cutting mechanism has a layout in which the film is cut from a side of the arrangement boards, a film delivery portion for delivering the film cut by the film cutting mechanism to the film feeding mechanism is provided, the delivery portion is provided with a filmpush-up member for pushing up one end edge of the film, and the film feeding mechanism is provided with a film grip unit for gripping one end edge of the film that is cut by the film cutting mechanism and pushed up by the film push-up member, and a driving mechanism for horizontally moving the film grip unit in a transverse direction.

The booklet moving mechanism may contain a pair of booklet grips for gripping a content portion of the booklet, and an elevating mechanism for upwardly and downwardly moving the booklet grips, and the booklet may be downwardly moved by the elevating mechanism from a state that the spine of the booklet faces the gap while the content of the booklet is gripped by the booklet grips.

The film cutting mechanism may be configured to feed out a sheet-like film wound around a reel, separate released paper from a surface coated with the adhesive agent, and then cut the sheet-like film under tension in air which is being fed by the film feeding mechanism.
Furthermore, the film cutting mechanism may contain a longitudinal cutting unit having a longitudinal cutting cutter for cutting the film in a travel direction of the film, and a transverse cutting unit having a transverse cutting cutter for cutting the film in a width direction of the film on the basis of a length dimension from one header of a cover sheet of a booklet as an attaching target through a spine of the booklet to the other confronting header of the booklet,
a contact pin protrudes from a longitudinal moving block which supports the longitudinal cutting cutter through a shaft and moves in the film width direction,
a stopper protrudes from a transverse moving block that supports the transverse cutting cutter through a shaft and moves in the film width direction, and
the contact pin of the longitudinal moving block for supporting through a shaft the longitudinal cutting cutter positioned to a width direction dimension of a film to be next cut comes into contact with the stopper of the transverse moving block at an evacuation position to position the transverse cutting cutter.

### Brief Description of the Drawings

[Fig. 1] Fig. 1 is a diagram showing a summary of a film cover attaching method according to an embodiment of the present invention.
[Fig. 2] Fig. 2 is a front view showing an arrangement relationship between a film supply mechanism and a film cutting mechanism installed in a film cover attaching device according to the embodiment of the present invention.
[Fig. 3] Fig. 3 is a diagram showing only the film supply mechanism which is taken out from the front view of Fig. 2.
[Fig. 4] Fig. 4A is a perspective view showing a condition of a film which is cut at a film supply position, and Fig. 4B is a front view showing a waste film collecting roller.
[Fig. 5] Figs. 5A to 5C are front views showing the construction of a film leading edge arranging table provided to a film delivering unit.
[Fig. 6] Figs. 6A and 6B are side views showing the construction of the film leading edge arranging table provided to the film delivery unit.
[Fig. 7] Fig. 7 is a front view showing the film cutting mechanism taken out from the front view of Fig. 2.
[Fig. 8] Fig. 8 is a view taken along an arrow line A-A of Fig. 7.
[Fig. 9] Fig. 9 is a view taken along an arrow line B-B of Fig. 7.
[Fig. 10] Fig. 10 is a plan view showing the film cutting mechanism.
[Fig. 11] Figs. 11A to 11D are diagrams showing the operation of the film cutting mechanism when a film is cut to have a smaller width than the width of a previously cut film.
[Fig. 12] Figs. 12A to 12D are diagrams showing the operation of the film cutting mechanism when a film is cut to have a larger width than the width of a previously-cut film.
[Fig. 13] Fig. 13 is a front view showing a film feeding mechanism installed in a film cover attaching device according to an embodiment of the present invention.
[Fig. 14] Fig. 14 is a plan view showing the film feeding mechanism.
[Fig. 15] Figs. 15A and 15B are front views showing a film grip unit.
[Fig. 16] Fig. 16 is a front view showing a booklet moving mechanism installed in the film cover attaching device according to the embodiment of the present invention and the peripheral structure thereof.
[Fig. 17] Fig. 17 is a side view showing the booklet moving mechanism.
[Fig. 18] Fig. 18 is a back view showing a driving unit of a booklet grip unit.
[Fig. 19] Fig. 19 is a front view showing the operation of attaching a film to a booklet by the booklet moving mechanism and the peripheral structure thereof.
[Fig. 20] Fig. 20 is a diagram showing an operation subsequent to Fig. 19.
[Fig. 21] Fig. 21 is a diagram showing an operation subsequent to Fig. 20.
[Fig. 22] Fig. 22 is a diagram showing an operation subsequent to Fig. 21.
[Fig. 23] Figs. 23A and 23B are perspective views showing another embodiment of attaching a film cover to a booklet.
[Fig. 24] Fig. 24A is a front view showing a modification of a booklet grip as a constituent element of the booklet moving mechanism, and Fig. 24B is a side view of the same.

### Description of Reference Numerals

1: film cutting step, 2: film arranging step, 3: film attaching step, F: film, Fh: released paper, Fa: waste film, W: booklet, W1: content, W2: spine, W3: front cover sheet, W4: back cover sheet, P1: supply position, P1a: delivery portion, P2: film standby position, 100 : filmsupply mechanism, 101: reel, 102, 103, 104: feed-out roller group, 105: feed-outmotor, 106: driving force transmission member, 107: return guide, 108: released paper collecting roller, 109: released paper collecting motor, 110: waste film collecting roller, 111: film leading edge arranging table, 112: film push-up piece, 113: film push-up projection, 114: air cylinder, 115: picking rod, 116: film support guide, 120: film driving mechanism, 121: driving roller, 122: belt having driving teeth, 123: return pulley, 200: film cutting mechanism, 210: transverse cutting unit, 211: support frame body, 212: moving block, 213: transverse cutting cutter, 214: transverse moving cylinder, 215: braking cylinder, 216: transverse cutting cutter receiving table, 217: contact pin, 218: pin driving cylinder, 220: vertical cutting unit, 221: support frame body, 222: moving block, 223: vertical cutting cutter, 224: transverse position adjusting motor, 225: ball screw mechanism, 226: vertical cutting cutter receiving table, 227: stopper, 300: film feeding mechanism, 310: film grip unit, 311: base table, 311a: grip plane, 312: chuck, 313: driving cylinder, 314: wedge member, 320: guide rail, 321: driving motor, 322: driving force transmission belt, 400: booklet moving mechanism, 401: arrangement board, 402: gap, 403: film adsorbing mechanism, 410: brush roller, 411: actuator, 420: booklet grip unit, 421: booklet grip, 422: driving motor, 423: belt having teeth, 424: driving nut, 425: ball screw, 426: air cylinder, 430: elevating mechanism, 431: guide rod, 432: guide bush, 433: driving motor, 434: driving force transmission chain, 440: bottom portion support plate, 441: front sheet support plate, 450: front sheet receiving guide, 451: belt conveyor, 460: moving wall, 461: actuator,

### Best Modes for carrying out the Invention

Embodiment according to the present invention will be described hereunder with reference to the drawings.

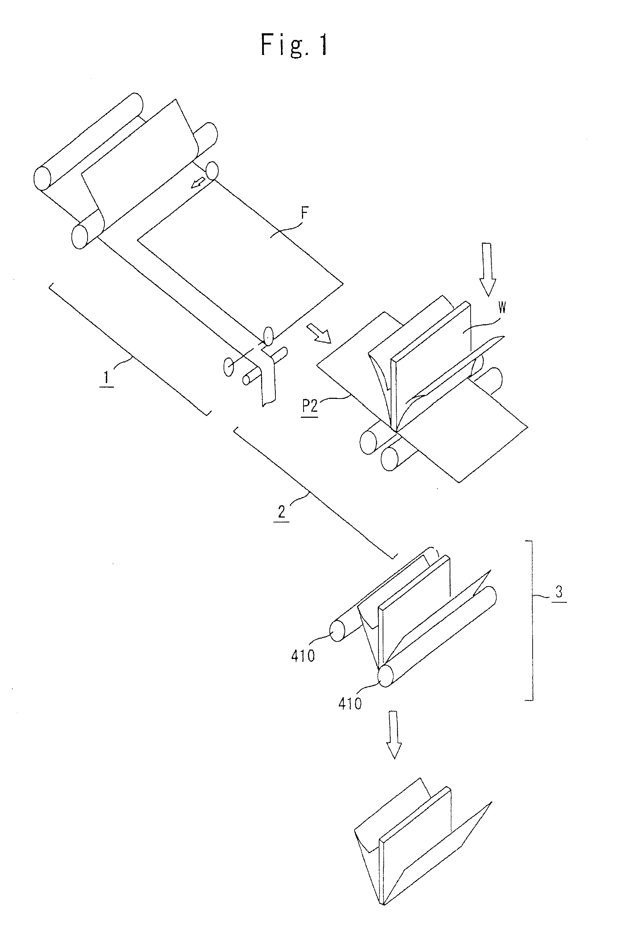

Fig. 1 is a diagram showing the summary of a film cover attaching method according to an embodiment.
The film cover attaching method according to this embodiment contains a film cutting step 1, a film arranging step 2 and a film attaching step 3.
In the film cutting step 1, a sheet-like resin film F having adhesive agent coated on one surface thereof is cut in conformity with the dimension of a booklet W as an attaching target. The booklet W has three faces, a front cover sheet, a back cover sheet and a spine. For example, the thickness of the booklet, the length from the spine to the header of the booklet, the length between the head and the tail of the booklet, the thickness of the content of the booklet, the thickness of the cover sheet of the booklet, etc. are measured by a dimension measuring device (not shown), and the sheet-like resin film F is cut in conformity with the dimension based on "the thickness of the booklet + 2 x the length from the spine to the header", and "the length between the head and the tail of the booklet" of the booklet W.
Subsequently, in the film arrangement step 2, the cut film F is arranged at a predetermined film standby position P2. In the embodiment shown in Fig. 1, the film F is drawn out from the side, and disposed in horizontal position at the film standby position P2.
Subsequently, in the film attaching step 3, a booklet W is moved relatively to the film F arranged at the film standby position P2 so as to cross the film F substantially perpendicularly to the film face of the film F at the film standby position, and the film F is adhesively attached to the surfaces of the booklet W (the three faces, the front cover sheet, the back cover sheet and the spine) during the moving step. In this embodiment, the booklet W is downwardly moved from the upper side relatively to the film F arranged in horizontal position at the film standby position P2 to attach the film F to the surfaces of the booklet W. At this time, the booklet W having the film F adhesively attached thereto is passed between a pair of brush rollers 410, whereby the film F is pressed against the surfaces of the booklet W and also air bubbles remaining between the film F and the surfaces of the booklet W are evacuated so that the film F is brought into close contact with the surfaces of the booklet W.
Through the above step described above, the film F is adhesively attached to the three faces, the front cover sheet, the back cover sheet and the spine.

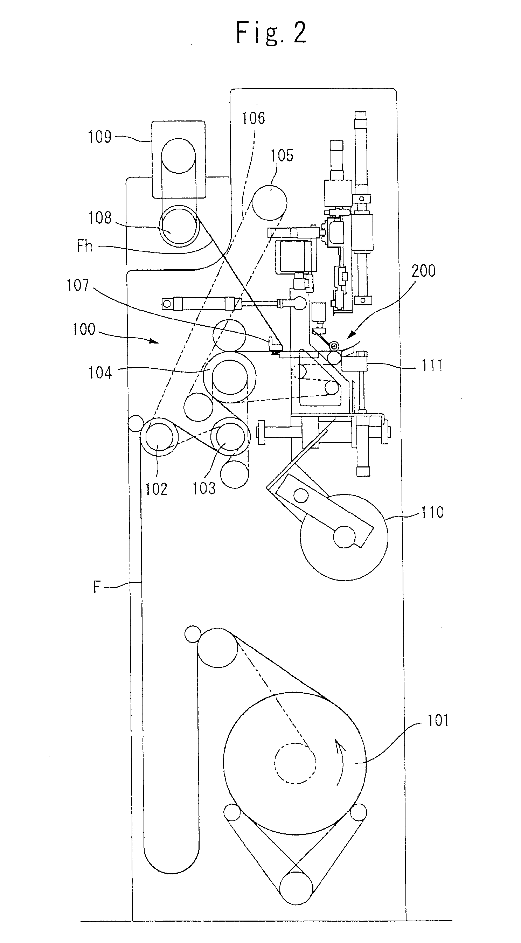

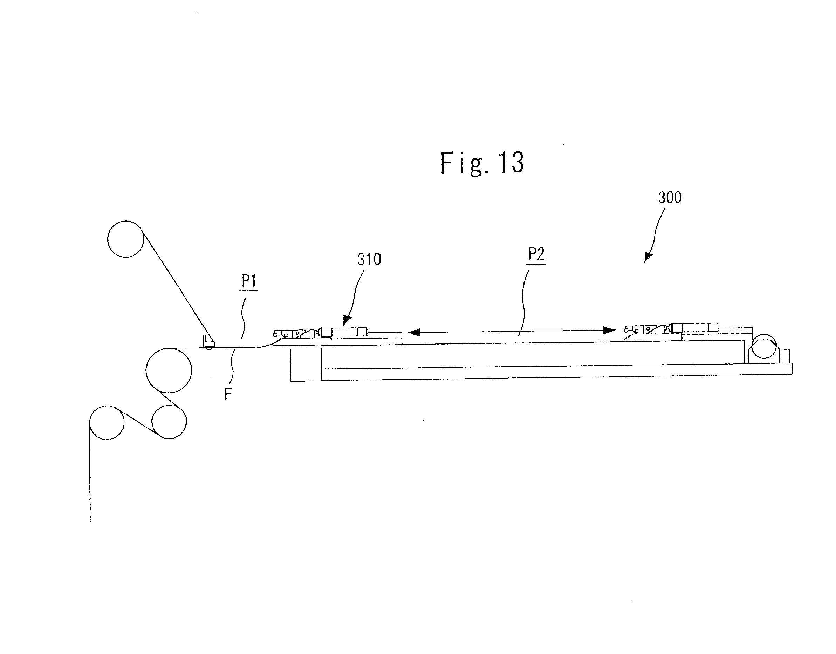

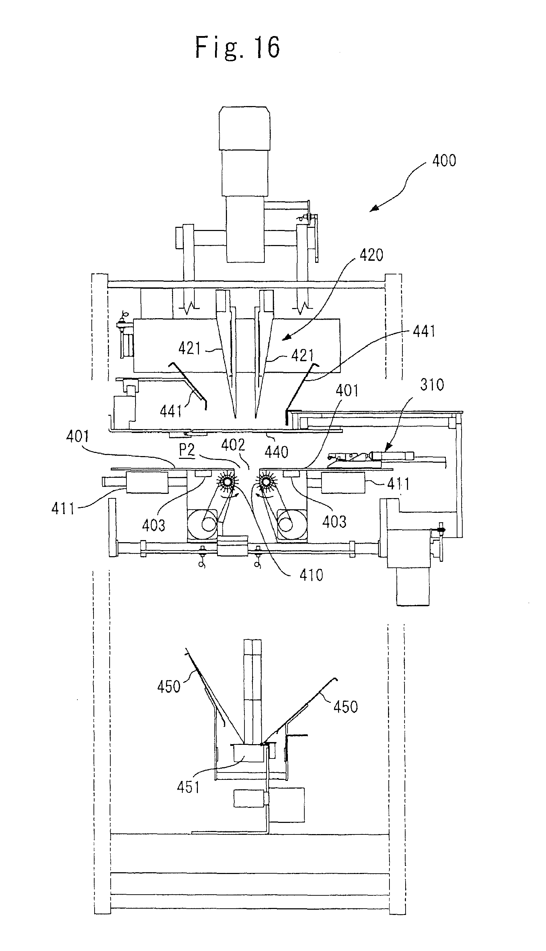

Next, a film cover attaching device according to this embodiment will be described in detail with reference to the drawings. The film cover attaching device is suitably configured to implement the film F cover attaching method described above, and it has respective mechanisms of a film supply mechanism 100 and a film cutting mechanism 200 shown in Fig. 2, a film feeding mechanism 300 shown in Fig. 13 and a booklet moving mechanism 400 shown in Fig. 16.
Fig. 2 is a front view showing the arrangement relationship between the film supply mechanism and the film cutting mechanism installed in the film cover attaching device.

### [Film Supply Mechanism]

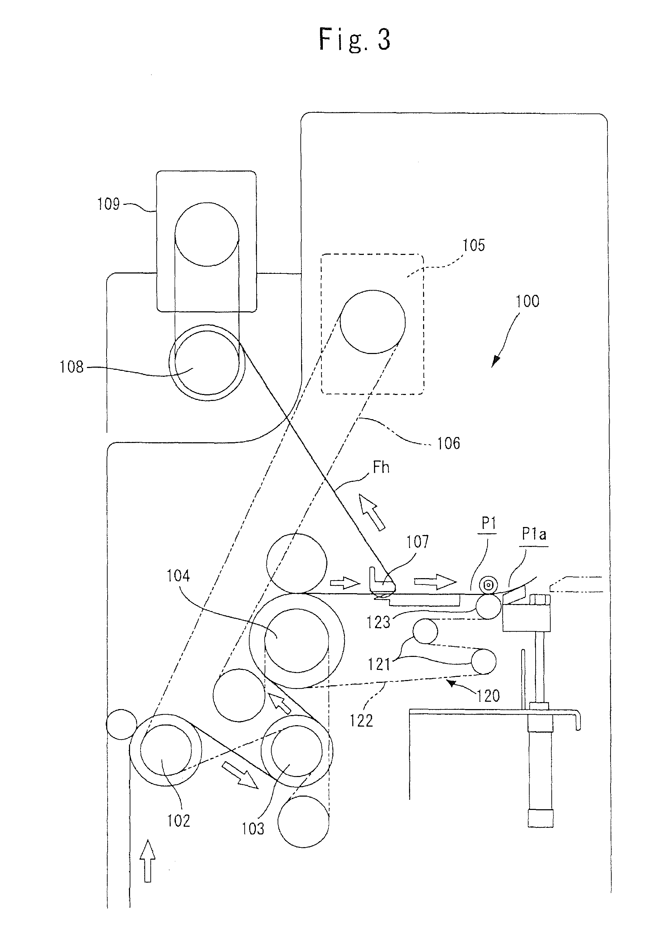

Figs. 3 to 6 are diagrams showing the film supply mechanism, and Fig. 3 is a diagram showing only the film supply mechanism which is taken out from the front view of Fig. 2.
The film supply mechanism 100 has a function of feeding out a sheet-like resin film F wound around a reel 101 to a supply position P1 as shown in Fig. 2. The fed-out film F is coated with adhesive agent on one surface thereof. The film F is wound around the reel 101 under the state that released paper Fh is attached to the adhesive-agent coated surface of the film F.

As shown in Fig. 3, the film F drawn out from the reel 101 is wound over a group of feed-out rollers 102, 103 and 104, and these feed-out rollers 102, 103 and 104 are arranged to rotate clockwise, counterclockwise and clockwise in this order. The rotational driving force from a feed-out motor 105 is transmitted to the group of the feed-out rollers 102, 103, 104 through a driving force transmission member 106 such as a driving chain or the like, and the feed-out rollers 102, 103 and 104 rotate so that the moving speed of the roller surfaces thereof are set to be equal to one another. In connection with the rotation of the group of these feed-out rollers 102, 103, 104, the film F is fed out from the reel 101.

A return guide 107 is disposed on a supply passage of the film F. The released paper Fh is returned at an acute angle by the return guide 107 to separate the film F and the released paper Fh from each other. The released paper Fh released from the adhesive surface of the film F is taken up by a released paper collecting roller 108 located obliquely behind and above the supply position P1. The released paper collecting roller 108 receives the rotational driving force from a released paper collecting motor 109 and rotates itself. The released paper collecting motor 109 actuates the released paper collecting roller 108 as a driving target in synchronism with the feed-out roller group 102, 103, 104 to be driven by the feed-out motor 105.
The film F is cut out at the supply position P1 in conformity with the dimension of the booklet W by a film cutting mechanism 200 described later, and arranged at the same position with the adhesive-agent coated surface thereof placed face up.

The edge portion of the supply position P1 serves as a delivery portion P1a, and the leading edge portion of the film F disposed at the delivery portion P1a is gripped and fed by a film grip unit 310 described later. The delivery portion P1a is provided with a film leading edge arrangement table 111 described later.

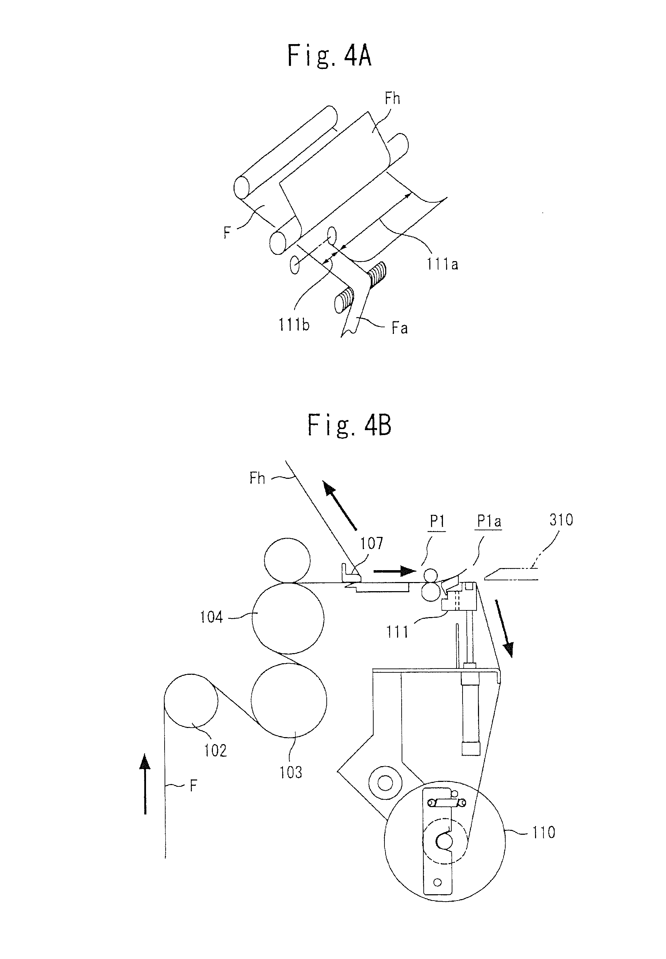

As shown in Fig. 4A, after the film F is cut in conformity with the dimension based on "the length between the head and the tail of the booklet", the film F remaining on the supply sheet (waste film Fa) is taken up by a waste film collecting roller 110 shown in Fig. 4B. The waste film collecting roller 110 is provided at the lower side of the supply position P1. The waste film Fa is downwardly led from the delivery portion P1a set at the tip portion of the supply position P1, and taken up by the waste film collecting roller 110.
Furthermore, as shown in Fig. 3, a film driving mechanism 120 is provided to guide the film F to be supplied from the supply position P1. The film driving mechanism is provided by winding a driving toothed belt 122 or the like around plural driving rollers 121, and moves in synchronization with the peripheral speed of the feed-out roller 104. A return pulley 123 at the top of the supply position P1 is brought into contact with the lower surface of the film F through the belt or the like.
The waste film collecting roller 110 contains a sliding clutch mechanism which spins around when a fixed or more tension is applied. The waste film collecting roller 110 receives rotational driving force of a waste film Fa collecting motor (not shown) and pulls the waste film Fa at all times. Accordingly, a fixed tension acts on the waste film Fa at all times. In connection with the feed-out operation of the film F, the waste film Fa is taken up by the waste film collecting roller 110.

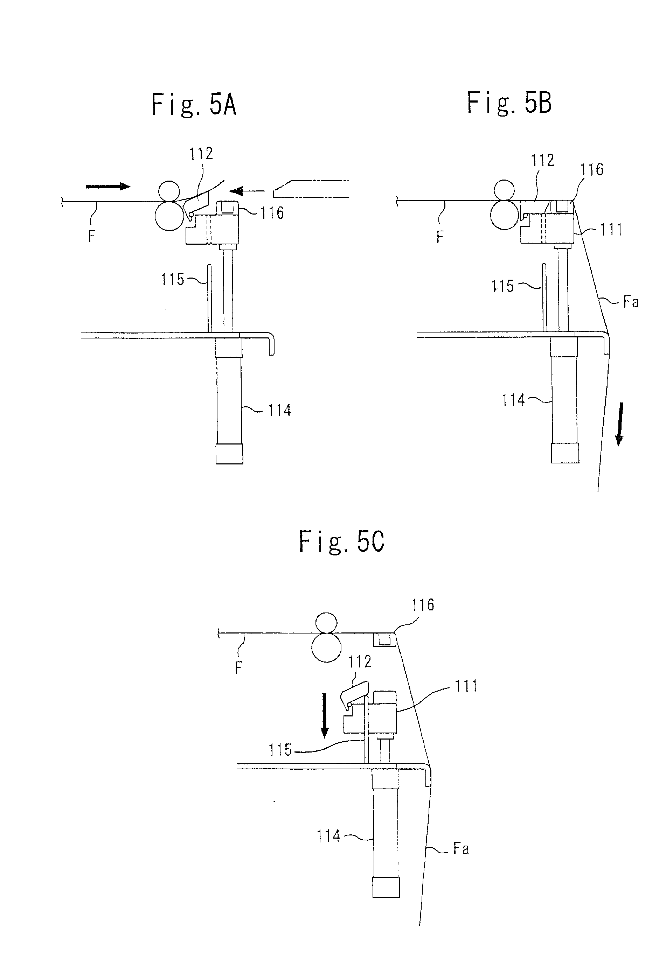

Figs. 5A to 6B are diagrams showing the construction of a film leading edge arranging table provided at the delivery portion.
As shown in Fig. 5A, the leading edge portion of the cut film F is arranged at the delivery portion P1a of the film F. Then, the leading edge portion of the film F concerned is gripped and fed by a film grip unit 310 described later. Here, in order to accurately insert the film grip unit 310 into the gap between a film leading edge arranging table 111 and the leading edge portion of the film F, the leading edge portion of the film F is required to be spaced from the film leading edge arranging table 111.

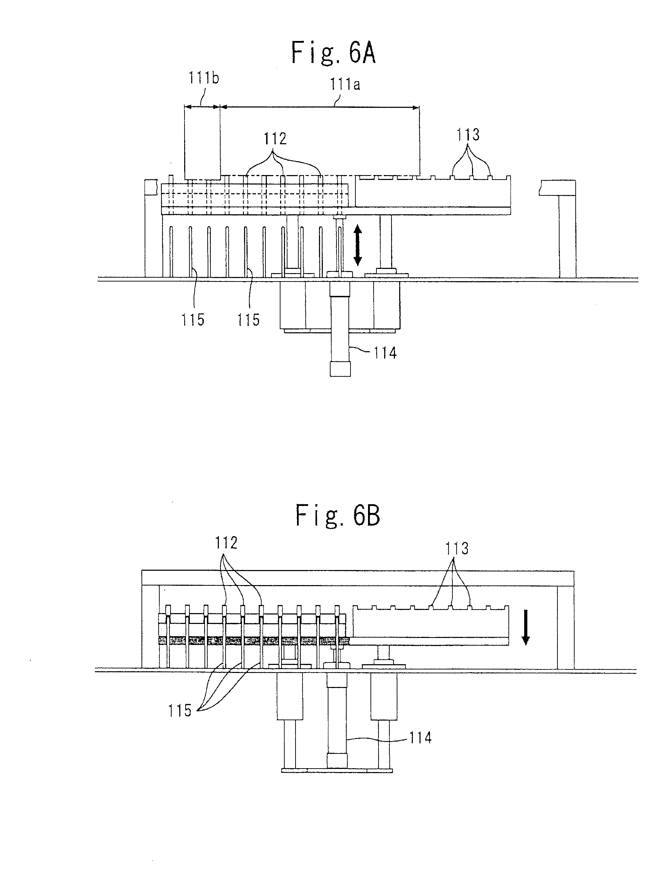

Therefore, as shown in Figs. 6A and 6B, many film push-up pieces 112 and film push-up projections 113 (these are generally named as "push-up members") are arranged in the width direction on the film leading edge arranging table 111 as the delivery portion P1a. The leading edge portion of the film F. is pushed up by these push-up members, and the leading edge portion of the film F is spaced from the upper surface of the film leading edge arranging table 111.
As shown in Fig. 6B, the film leading edge arranging table 111 is divided into two right and left parts substantially at the center thereof. The film push-up pieces 112 are installed in one area, and the film push-up projections 113 are formed in the other area. The film push-up pieces 112 freely protrude from the upper surface of the film leading edge arranging table 111. That is, the film push-up pieces 112 are urged by toggle springs (not shown) so as to be kept under a protruding state (see Fig. 5A). When downward external force larger than the urging force of the toggle spring acts on the film push-up pieces 112, the film push-up pieces 112 are pushed down to the same height as the upper surface of the film leading edge arranging table 111 (see Fig. 5B).

As shown in Fig. 6A, the film leading edge arranging table 111 has an area 111a in which the leading edge portion of the cut film F is disposed, and an area 111b in which the waste film Fa described above is disposed. The boundary between these areas 111a and 111b varies in accordance with the width dimension of the cut film F. The area 111b in which the waste film Fa is disposed is always located inside the area in which the film push-up pieces 112 are formed (see Fig. 6B).

The waste film Fa is pulled by the waste film collecting roller 110 as described above, and thus a fixed tension acts on the waste film Fa at all times. This tension acts on the film push-up pieces 112 as external force which pushes the film push-up pieces 112 down. Accordingly, in the area in which the waste film Fa is disposed, the film push-up pieces 112 are pushed down to the same height position as the upper surface of the film leading edge arranging table 111 (see Fig. 5B). Accordingly, the arrangement plane of the waste film Fa on the film leading edge arranging table 111 becomes a flat plane, and thus the waste film Fa is guided to the waste film collecting roller 110 without slack.
Furthermore, in the area where the leading edge portion of the cut film F is arranged on the film leading edge arranging table 111, the leading edge portion of the film F is pushed up by the projecting film push-up pieces 112 and the film push-up projections 113, thereby making it easy for the film grip unit 310 to grip the leading edge portion of the film F.

The film leading edge arranging table 111 is configured to be moved downwardly and upwardly by the driving force of an air cylinder 114. Picking rods 115 are disposed at the lower side of the many film push-up pieces 112 so as to face the film push-up pieces 112. When the film leading edge arranging table 111 is downwardly moved, the picking rods 115 push up the film push-up pieces 112 which have been pushed down (see Fig. 5C, Fig. 6B). Even when the film leading edge arranging table 111 is downwardly moved, the delivery portion P1a is provided with a film support guide 116 and thus the guide 116 supports the waste film Fa at the delivery portion P1a as shown in Fig. 5c.
The downward moving operation of the film leading edge arranging table 111 is performed every time the cut film F is fed by the film grid unit 310. Accordingly, the protrusion state of the film push-up pieces 112 can be set in conformity with the arrangement area 111a of the cut film F which varies every time the film F is supplied.

### [Film Cutting Mechanism]

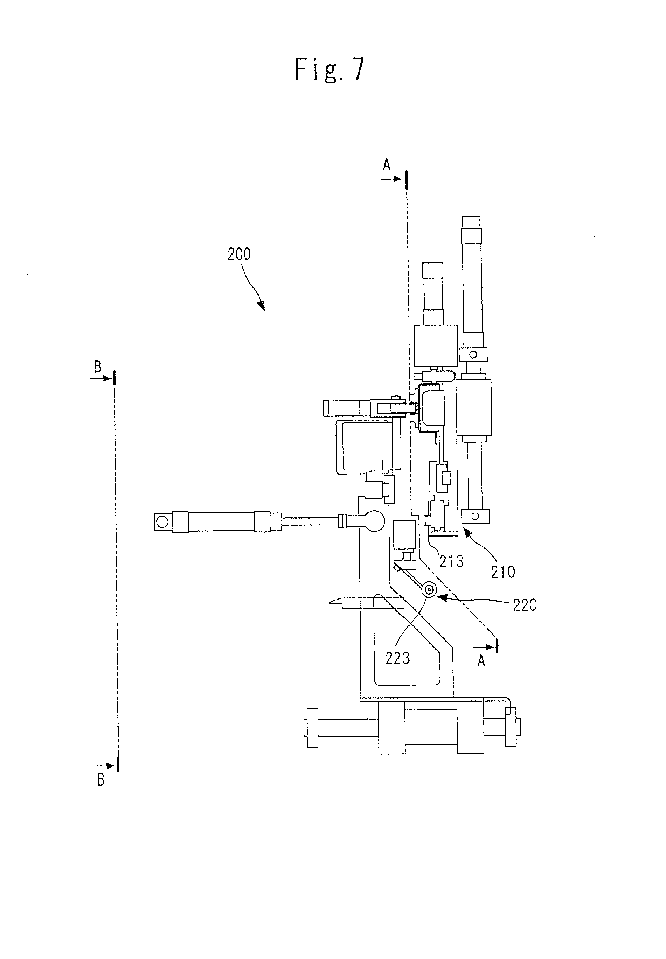

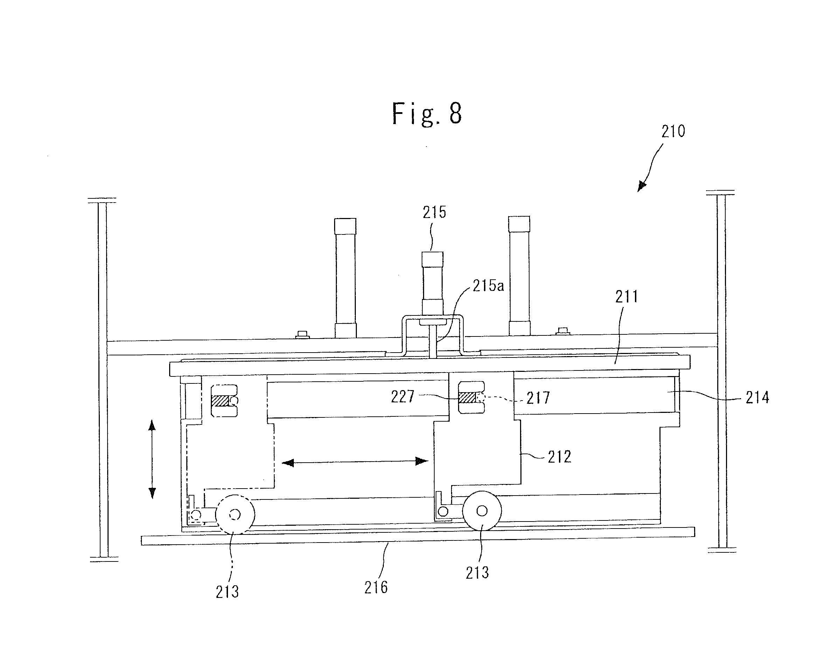

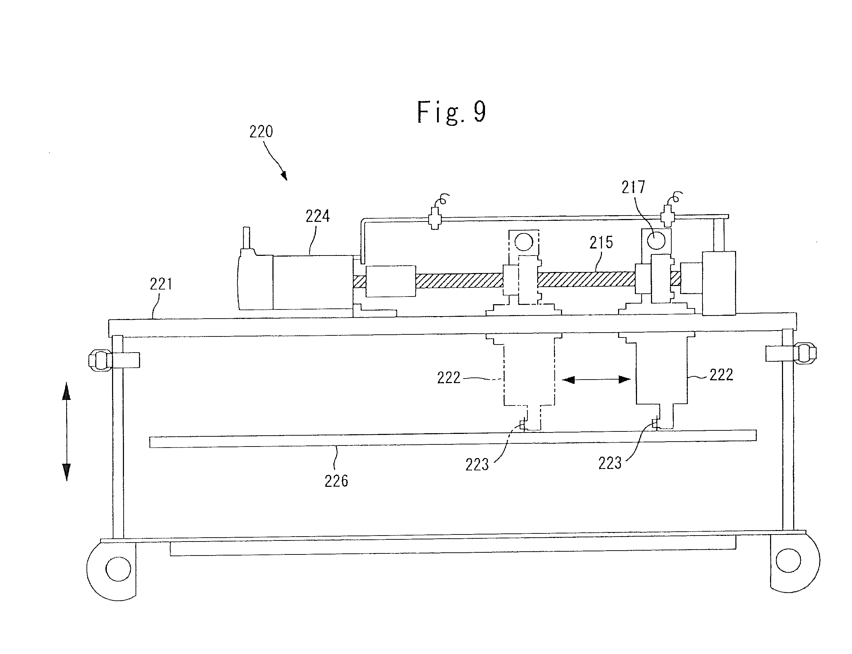

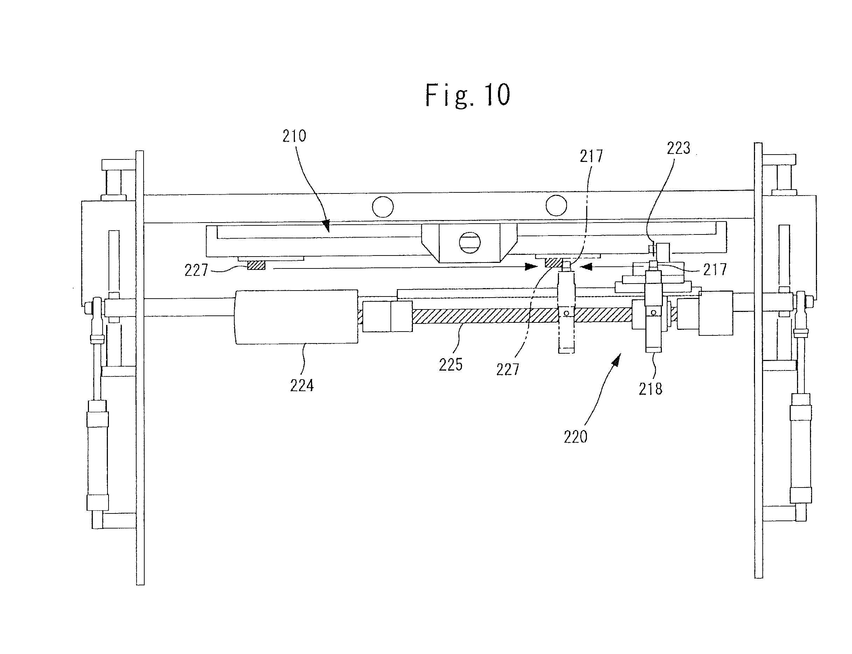

Figs. 7 to 12D are diagrams showing a film cutting mechanism, and Fig. 7 is a front view showing the film cutting mechanism which is taken out from the front view of Fig. 2. Fig. 8 is a view taken along an arrow line A-A in Fig. 7, and Fig. 9 is a view taken along an arrow line B-B in Fig. 7. Fig. 10 is a plan view of the film cutting mechanism.
The film cutting mechanism 200 has a transverse cutting unit 210 for cutting a sheet-like film F in a width direction, and a longitudinal cutting unit 220 for cutting the film F in a longitudinal direction.

As shown in Fig. 8, the transverse cutting unit 210 is configured so that a transverse cutting cutter 213 is secured to a moving block 212 installed in a support frame body 211 so as to be freely rotatable through a shaft, and moves in a transverse direction integrally with the moving block 212 along the support frame body 211 to cut the film F.

A moving mechanism for moving the moving block 212 in the transverse direction is not specifically shown. However, it is configured so that a convex rail extends in the transverse direction along the lower side of the support frame body 211, a concave short rail is provided to the confronting face of the moving block 212 so as to be engaged with the convex rail freely and slidably, and a piston shaft end (not shown) extending from the back side of the transverse moving cylinder 214 to the front side of the transverse moving cylinder 214 with respect to the paper surface of Fig. 8 is fitted to the moving block 212, whereby the moving block 212 is moved in the transverse direction by the driving force of the transverse moving cylinder 214.

A brake cylinder 215 is mounted on the support frame body 211. The brake cylinder 215 is configured to have a brake body (not shown) which is provided at the tip of a piston 215a thereof and suppresses the upper surface of the moving block 212 in the transverse direction along the support frame body 211, and has a function of holding the moving block 212 at a moving position by protruding the piston 215a.
Furthermore, the support frame body 211 of the transverse cutting unit 210 is freely movable upwardly and downwardly, and it moves in the up-and-down direction with the driving force of an elevating cylinder (not shown).

A transverse cutting cutter receiving table 216 is disposed at a site confronting the moving locus of the transverse cutting cutter 213 through the film F disposed at the supply position P1, and the transverse cutting cutter 213 cuts the film F in cooperation with the transverse cutting cutter receiving table 216.

With respect to a longitudinal cutting unit 220 shown in Fig. 9, although not specifically shown, for example, a convex rail is provided to a support frame body 221 so as to extend in the transverse direction along the lower side of the support frame body 211, and a concave short rail is provided on the confronting face of a moving block 222 to the support frame body 211 so that the convex rail is freely slidably fitted in the concave short rail, whereby the moving block 222 is freely movable installed. A longitudinal cutting cutter 223 is secured to the moving block 222 through an elevating cylinder (not shown) so as to be freely rotatable. Accordingly, the longitudinal cutting cutter 223 can be moved in the transverse direction integrally with the moving block 222 along the support frame body 221, positioned at a cutting position in conformity with the cutting width dimension of the film F and kept on standby in air by shrinking the elevating cylinder (not shown) of the longitudinal transverse cutter 223.

The longitudinal cutting unit 220 cuts a film F in the longitudinal direction in conformity with the feeding of the film F by the film grip unit 310. Furthermore, the movement of the moving block 222 in the transverse direction is performed through a ball screw mechanism 225 which is rotated by the driving force of a transverse position adjusting motor 224.

Furthermore, a longitudinal moving slide support frame at the lower side of the longitudinal cutting unit 220 is slid by the driving of the longitudinal driving cylinder of the longitudinal cutting unit 220 as shown in Fig. 7, whereby the moving block 222 of the longitudinal cutting cutter 223 is also freely movable in the longitudinal direction of the film F supplied to the supply position P1.

Furthermore, a longitudinal cutting cutter receiving table 226 is disposed so as to confront the longitudinal cutting cutter 223 through the film F disposed at the supply position P1, and the longitudinal cutting cutter 223 cuts the film F in cooperation of the receiving table 226.

As shown in Fig. 10, the moving block 212 of the transverse cutting cutter 213 is provided with a stopper 227, and the moving block 222 of the longitudinal cutting cutter 223 is provided with a contact pin 217 so that the contact pin 217 freely protrudes. A pin driving cylinder 218 makes the contact pin 217 protrude to a position at which the contact pin 217 interferes with the stopper 227, and also the pin driving cylinder 218 makes the contact pin 217 evacuate to a position at which the contact pin 217 does not interfere with the stopper 227. When the moving block 212 of the transverse cutting cutter 213 moves in the transverse direction, the stopper 227 comes into contact with the contact pin 217 provided to the moving block 222 of the longitudinal cutting cutter 223. At the same time, the brake cylinder 215 is actuated, whereby the moving block 212 of the transverse cutting cutter 213 can be held at the contact position concerned.

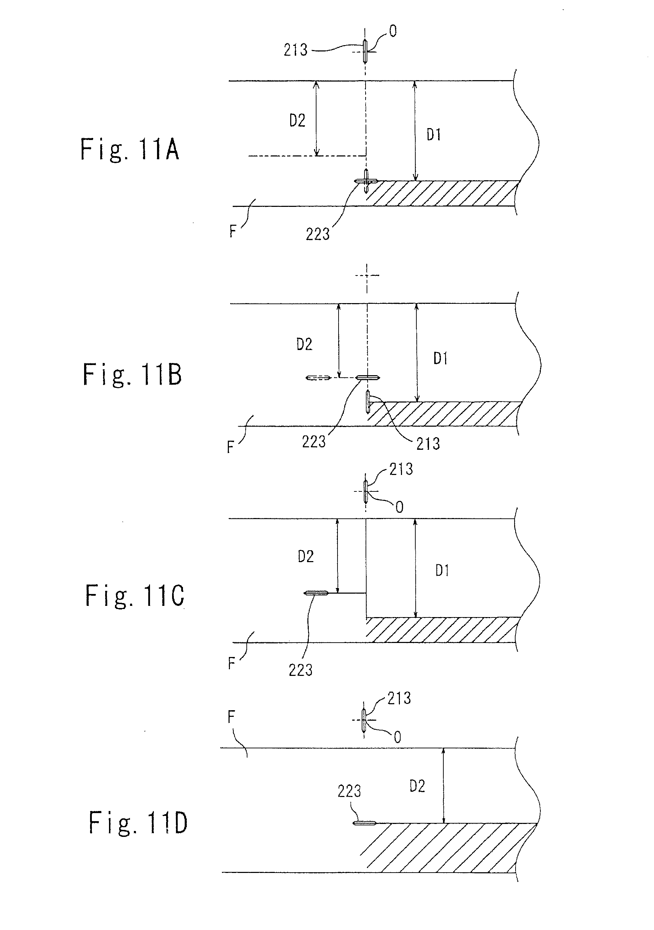

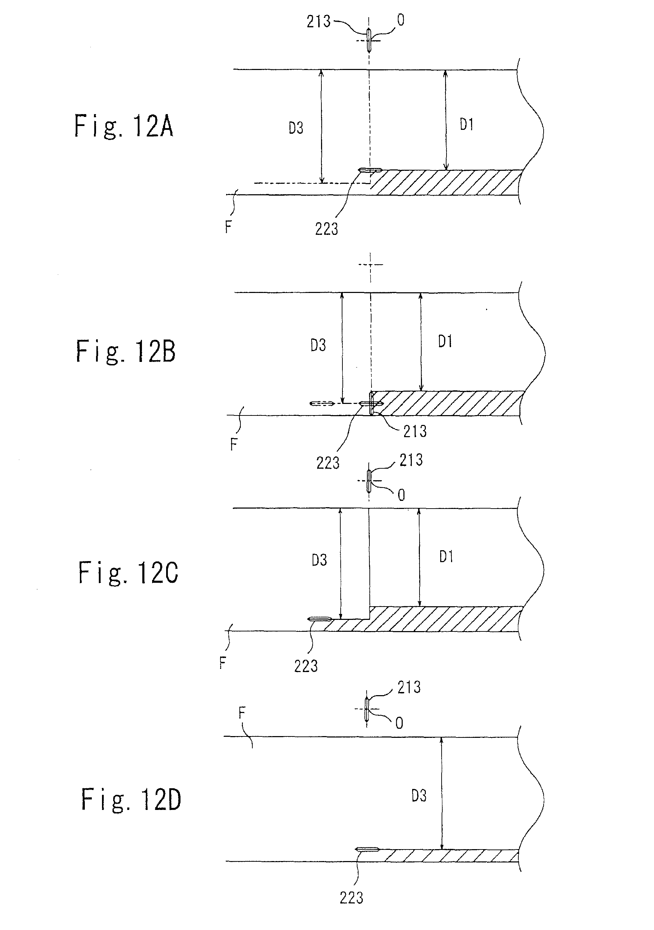

Next, the operation of the film cutting mechanism 200 described above will be described with reference to the respective drawings of Figs. 11A to 11D and Figs. 12A to 12D. In the following description of the operation, the movement or elevation of the transverse cutting cutter 213 which is caused by the movement of the moving block 212 or the elevation of the support frame body 211 may be described merely as the movement or elevation of the transverse cutting cutter 213, and likewise the movement or elevation of the longitudinal cutting cutter 223 which is caused by the movement of the moving block 222 or the elevation of the elevating cylinder (not shown) of the longitudinal cutting cutter 223 may be described merely as the movement or elevation of the longitudinal cutting cutter 223.

Figs. 11A to 11D are diagrams showing an operation executed when a film is cut at a width dimension D2 smaller than the width D1 of a film to be previously cut.
Fig. 11A shows a state that the longitudinal cutting cutter 223 is kept at the width dimension position of the film to be cut previously and the film F concerned is drawn out by only the length dimension. Under this state, the longitudinal cutting cutter 223 is disposed at the width dimension position of the film to be previously cut and the cutting end in the longitudinal direction of the film F concerned.
At this time, the transverse cutting cutter 213 is on standby at an ascending position of an original point O which is sideward displaced from the film supply position P1. The transverse cutting cutter 213 reaches this standby position by shrinking the elevating cylinder (not shown) of the support frame body 211 as shown in Fig. 2 or Fig. 7 by a prescribed amount. The transverse cutting cutter 213 moves from this standby position in the width direction of the film F, and stops at a position above the locating position of the longitudinal cutting cutter 223. The positioning of the transverse cutting cutter 213 to this stop position is performed by the contact of the stopper 227 to the contact pin 217. As described above, the contact pin 217 is provided to the moving block 222 of the longitudinal cutting cutter 223, and the stopper 227 is provided to the moving block 212 of the transverse cutting cutter 213. The transverse cutting cutter 213 which moves to this position is kept at the position concerned by the actuation of the brake cylinder 215 (see Fig. 11A).

Subsequently, the elevating cylinder (not shown) of the longitudinal cutting cutter 223 is shrunk by a predetermined amount, whereby the longitudinal cutting cutter 223 is upwardly moved to be separated from the film F, moved in the transverse direction with keeping the upward moved position concerned and positioned to the width dimension position of the film F to be next cut. The upward moved position of the longitudinal cutting cutter 213 is set to be lower than the upward moved position of the transverse cutting cutter 213, and thus there is no risk that the longitudinal cutting cutter 223 interferes with the transverse cutting cutter 213 during the movement thereof.

The longitudinal cutting cutter 223 positioned to the width dimension position of the film F to be next cut is downwardly moved at the position concerned and brought into contact with the film F. The longitudinal cutting cutter 223 moves to the upstream side along the longitudinal direction of the film F by only a fixed distance (for example, about 50mm) to cut the film F in the longitudinal direction (see Fig. 11B). Through this operation of the longitudinal cutting cutter 223, a passage for the next operation of the transverse cutting cutter 213 is left open.

Subsequently, the transverse cutting cutter 213 is downwardly moved to come into contact with the film F, and then moved from the width dimension position of the film to be previously cut to the original point in the width direction of the film F to cut the film F (see Fig. 11C). Accordingly, the rear edge of the film F to be previously cut is cut in the width direction, and separated from the sheet of the film F. The film F separated from the sheet is fed by the film grip unit 310.

Subsequently, the film grip unit 310 grips and pulls out the leading edge of the film F to be next cut. At this time, the longitudinal cutting cutter 223 has been returned from the fixed-distance moved position at the upstream side along the longitudinal direction to the original position before the movement concerned, and it cuts the film F in the longitudinal direction at the original position in conformity with the pull-out operation of the Film F (see Fig. 11D).
Thereafter, the operation shown in Fig. 11A or Fig. 12A described later is repeated.

Fig. 12A to Fig. 12D are diagrams showing an operation when the film F is cut at a width dimension D3 larger than the width D1 of the film F to be previously cut.
Fig. 12A shows a state that the longitudinal cutting cutter 223 is kept at the width dimension position of the film F to be previously cut and the film F concerned is drawn out by only the length dimension. Under this state, the longitudinal cutting cutter 223 is disposed at the width dimension position of the film to be previously cut, and at the cutting end in the longitudinal direction of the film F concerned.
The longitudinal cutting cutter 223 is upwardly moved from this position and separated from the film F, and then it is moved in the transverse direction with keeping the ascending position, positioned to the width dimension position of the film F to be next cut, and downwardly moved at the position concerned to come into contact with the film F (see Fig. 12B).

At this time, the transverse cutting cutter 213 is on standby at the ascending position of the original point which is displaced sideward from the film supply position P1. The transverse cutting cutter 213 is moved from the standby position in the width direction of the film F, and stopped at a position above the locating position of the longitudinal cutting cutter 223. The positioning of the transverse cutting cutter 213 to this stop position is performed by the contact of the stopper 227 to the contact pin 217. As described above, the contact pin 217 is provided to the moving block 222 of the longitudinal cutting cutter 223, and the stopper 227 is provided to the moving block 212 of the transverse cutting cutter 213. The transverse cutting cutter 213 which is moved to this position is kept at the position concerned by actuation of the brake cylinder 215 (see Fig. 12B).

The longitudinal cutting cutter 223 positioned to the width dimension position of the film F to be next cut is moved from this position to the upstream side along the longitudinal direction of the film F by only a fixed distance (for example, about 50mm) to cut the film F in the longitudinal direction (see Fig. 12C). By the operation of the longitudinal cutting cutter 223, a passage for the next operation of the transverse cutting cutter 213 is left open.

Subsequently, the transverse cutting cutter 213 is downwardly moved and brought into contact with the film F, and it is moved from the width dimension position of the film F to be previously cut to the original point in the width direction of the film F to cut the film F (see Fig. 12C). Accordingly, the rear edge of the film F to be previously cut is cut in the width direction, and separated from the sheet of the film F. The film F separated from the sheet is fed out by the film grip unit 310.

Subsequently, the film grip unit 310 grips and pulls out the leading edge of the film F to be next cut. At this time, the longitudinal cutting cutter 223 has been returned from the fixed-distance moved position at the upstream side along the longitudinal direction to the original position before the movement concerned, and it cuts the film F in the longitudinal direction at the original position in conformity with the pull-out operation of the film F (see Fig. 12D).
Thereafter, the operation shown in Fig. 12A or Fig. 11A described above is repeated.

### [film feeding mechanism]

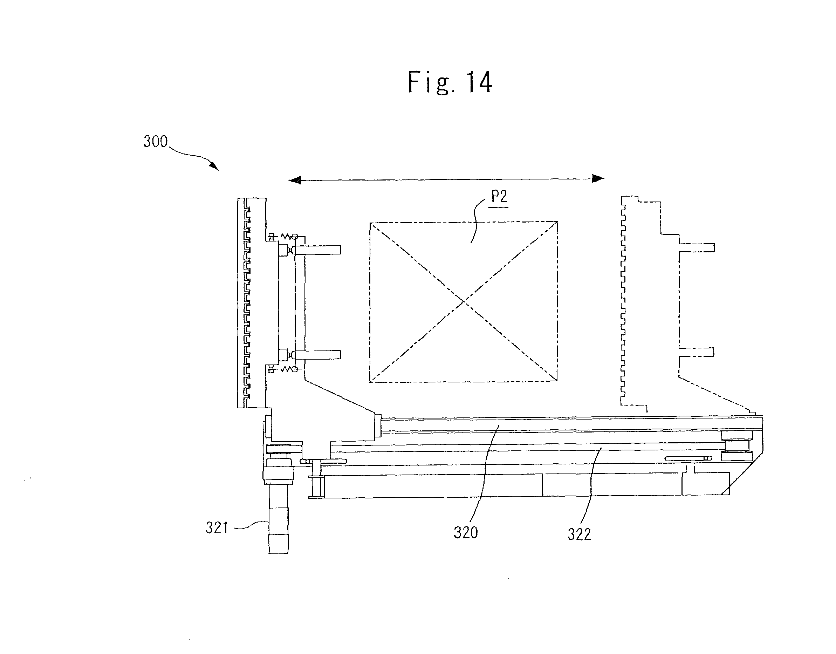

Fig. 13 to Fig. 15B are diagrams showing a film feeding mechanism 300.
As shown in Fig. 13, the film feeding mechanism 300 is configured so that the film grip unit 310 grips the leading edge of the film F disposed at the supply position P1 to move the film F in the direction to the right of Fig. 13, and disposes the film at a film standby position P2 which is set sideways. As shown in Fig. 14, the film grip unit 310 is freely movable horizontally along the guide rail 320 extending in the right-and-left direction. The film grip unit 310 is joined to a driving force transmission belt 322 (driving mechanism) which is rotationally driven by a driving motor 321, and it is moved integrally with the driving force transmission belt 322.

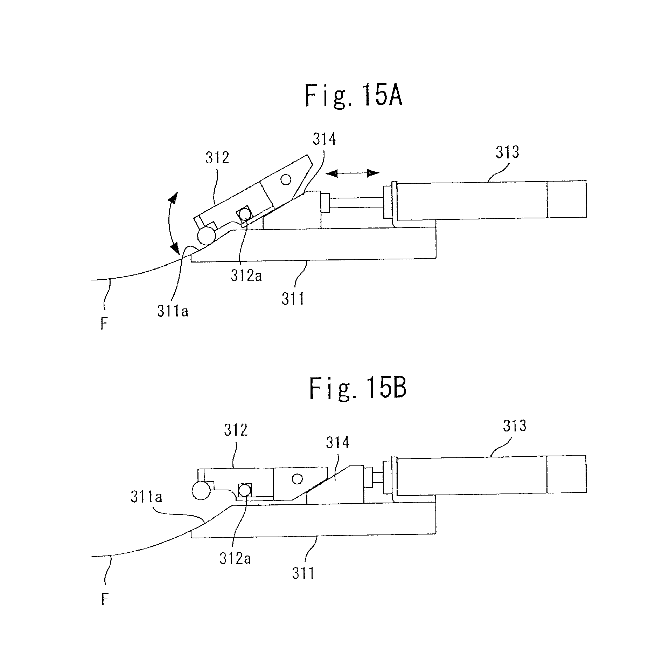

As shown in Figs. 15A and 15B, the film grip unit 310 has a grip face 311a formed at the tip of the base table 311, and a chuck 312 is freely opened and closed with respect to the grip face 311a. The chuck 312 is freely rotatably supported through a shaft 312a fixed to the base table 311 substantially at the center in the travel direction of the film F, and the leading edge of the film F in the travel direction is designed in a wedge shape so that the lower surface thereof is inclined. The tip of the piston rod of the driving cylinder 313 mounted on the base table 311 is provided with a wedge member 314 whose upper surface is a slant surface. The opening/closing of the chuck 312 is performed by approaching and retracting the wedge member 314 provided to the tip of the piston rod of the driving cylinder 313 to and from the wedge-shaped portion of the chuck 312, thereby making the chuck 312 tilt.

The film standby position P2 is set on the film feeding passage of the film grip unit 310, and a booklet W is passed over the film F disposed at the film standby position P2 so as to intersect with the film F from the upper side, whereby the film F is adhesively attached to the cover sheet of the booklet W concerned. The movement of the booklet W is performed by a booklet moving mechanism 400.

### [Booklet Moving Mechanism and Peripheral Structure thereof]

Fig. 16 to Fig. 24B are diagrams showing a booklet moving mechanism and a peripheral structure thereof.
The peripheral structure of the film standby position P2 will be further described with reference to Fig. 16. As shown in Fig. 16, arrangement boards 401 each having a flat surface on which the film F is disposed are provided at the film standby position P2. On the other hand, no arrangement board 401 exists substantially at the center of the film standby position P2, and a gap 402 through which the booklet W is passed so as to intersect with the gap 402 from the upper side is formed. The gap 402 extends in the width direction of the film F disposed at the film standby position P2. The arrangement boards 401 and brush rollers 410 are moved in the lateral direction by actuators 411 as described later, whereby the gap 402 is adjustable to an interval corresponding to the spine dimension of the booklet W intersecting with the gap 402 from the upper side.
Furthermore, film adsorbing mechanisms 403 for adsorbing and holding the film F on the surfaces thereof are installed in the arrangement board 401. Each film adsorbing mechanism 403 vacuum-sucks the inside of a vacuum nozzle opened to the surface of the arrangement board 401 to keep the inside of the vacuum nozzle to a negative pressure state, whereby the film F disposed at the opening of the vacuum nozzle is adsorbed by negative-pressure action.
Furthermore, a pair of brush rollers 410 are provided just below the gap 402 so as to come into contact with the surface of the film F which is attached to the front cover sheet and the back cover sheet of the booklet W passed through the gap 402 with the spine of the booklet W being set as the apex while the brush rollers 410 are rotated.

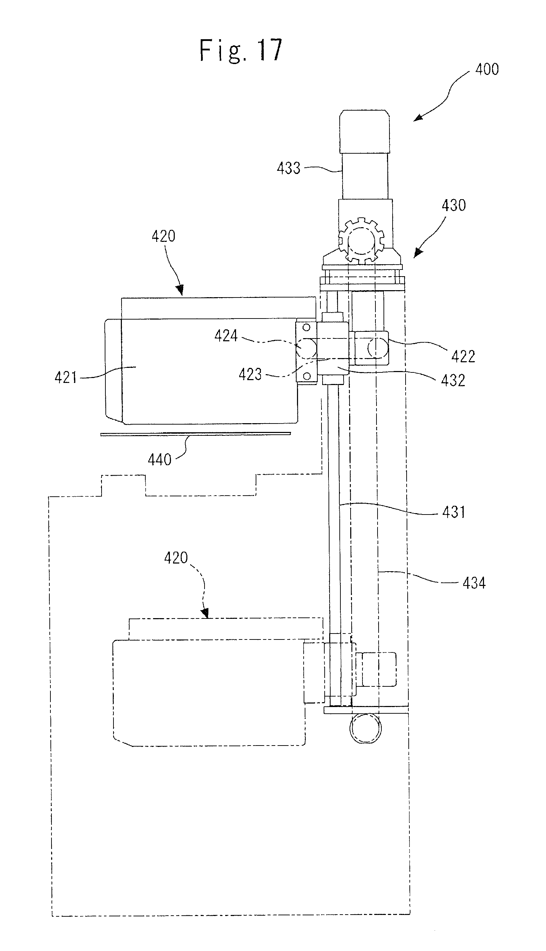

The booklet moving mechanism 400 contains a booklet grip unit 420 for gripping a content portion of the booklet W (sheets constituting respective pages except for the cover sheets), an elevating mechanism 430 for upwardly and downwardly moving this booklet grip unit 420.
As shown in Fig. 17, the elevating mechanism 430 has a guide bush 432 which is freely movable along a guide rod 431 extending in the up-and-down direction, and the booklet grip unit 420 is joined to the guide bush 432. The driving force from a driving motor 433 is transmitted to the guide bush 432 through a driving force transmission chain 434, and the guide bush 432 is moved in the up-and-down direction by this driving force. The booklet grip unit 420 is upwardly and downwardly moved integrally with the guide bush 432.

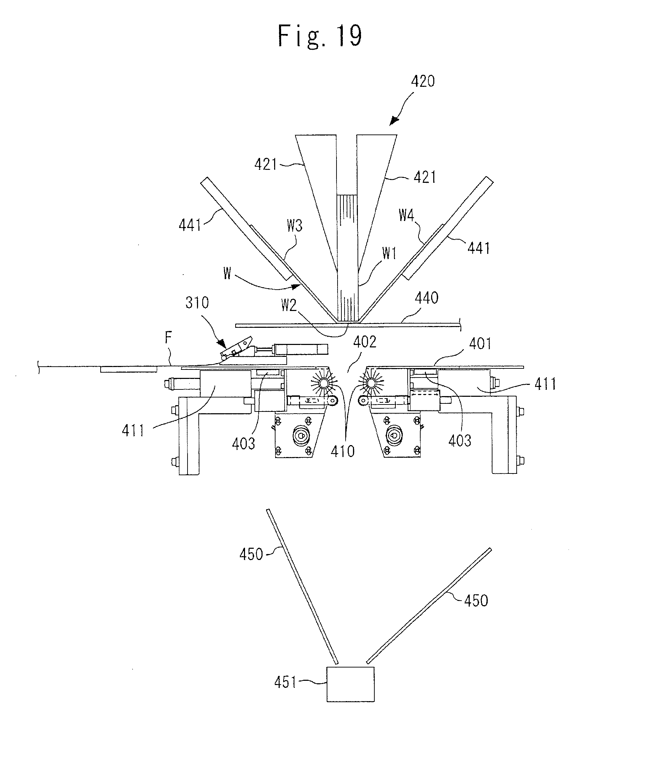

The booklet grip unit 420 shown in Fig. 16 has a pair of booklet grips 421, and grips a content W1 portion of the booklet W by these booklet grips 421 (see Fig. 19). The pair of booklet grips 421 have outer surfaces which are formed as wedge-shaped slant surfaces, and designed to gradually increase in lateral width from the lower end to the upper end thereof.

The booklet W is fed into the booklet grip unit 420 while the spine W2 is placed at the bottom side, the content W1 is bundled and only the two cover sheets W3 and W4 are opened in V-shape. Under this state, the elevatingmechanism 430 is downwardly moved from a standby original point at the upper side, and a pair of booklet grips 421 spaced from each other at an interval which is kept to be slightly larger than the thickness of the content W1 respectively invade into the gap between the content W1 and the cover sheet W3, W4 from the upper side of the booklet W.

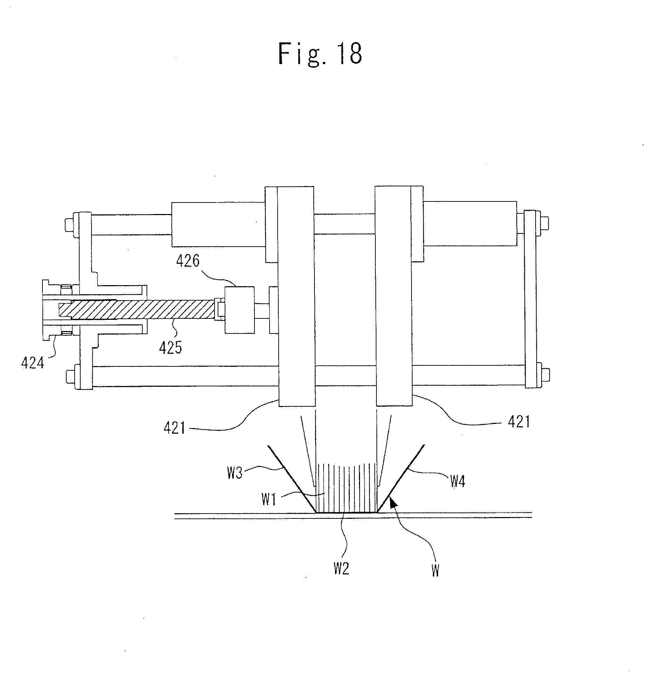

The pair of booklet grips 421 are configured so that the rotational driving force of a driving motor 422 fixed to the guide bush 432 is transmitted to a driving nut 424 through a toothed belt 423, and a ball screw 425 which is threadably fitted in the driving nut 424 is moved in the axial direction by rotation of the driving nut 424 to open/close one of the booklet grips 421 which is joined to one end of the ball screw 425 as shown in Figs. 17 and 18. The other booklet grip 421 is fixed and serves as a positional reference for the opening/closing operation.

Furthermore, an air cylinder 426 is provided between one end of the ball screw 425 and the booklet grip 421. The interval between the pair of booklet grips 421 is reduced till a predetermined amount just before gripping of the content W1 of the booklet W by the ball screw mechanism on the basis of the thickness dimension of the content which is measured in advance by a dimension measuring device, and subsequently the content W1 of the booklet W is gripped under a fixed pressured by the air cylinder 426.

A bottom portion support plate 440 and cover sheet support plates 441 are mounted above the film standby position P2.
The bottom portion support plate 440 supports the bottom portion (that is, the spine portion W2) of the booklet W under the state that the content portion is gripped by the booklet grips 421 at the ascending end. The bottom portion support plate 440 is freely slidable in the transverse direction, and slides in the transverse direction to open the downward feeding locus of the booklet W. The cover sheet support plates 441 support the cover sheets W3 and W4 opened in V-shape from the sides.

The pair of brush rollers 410 face each other so as to be spaced from each other at a slightly larger interval than the thickness of the booklet W as a target to which the film F is adhesively attached. Each brush roller 410 is freely movable in the transverse direction by the actuator 411.

While the constructions of each actuator 411 is not specifically shown in the figures, it is configured as an air cylinder in which a piston is provided at a middle portion of a piston rod, for example. The piston rod is fixed at the side at which the arrangement board 401 and the brush roller 410 are located, and the cylinder fixed to the support frame is driven to move the brush roller 410 and the arrangement board 401 in the transverse direction. Furthermore, each actuator 411 pushes the brush roller 410 so that the descending booklet W pushes and expands a limit switch (not shown) disposed below the brush rollers 410, and a piston of the cylinder constituting the actuator 411 is moved by operating a control valve for gradually evacuating air of the cylinder constituting the actuator 411 on the basis of a signal from the limit switch, whereby the interval 402 403 between the pairs of the brush rollers 410 and the arrangement boards 401 is gradually increased.

A pair of cover sheet receiving guides 450 are provided at the further lower position of the film standby position P2 so as to support the booklet W passing and descending between the respective brush rollers 410 while the respective cover sheets W3 and W4 are expanded in V-shape. The lower end edges of the respective cover sheet receiving guides 450 are arranged so as to be spaced from each other at a fixed distance, and a feeding face of a belt conveyor 451 is disposed in the gap between the lower end edges.

Next, the operation of adhesively attaching the film F to the booklet W by the booklet moving mechanism 400 and the peripheral structure thereof will be described with reference to Figs. 19 to 22.
As shown in Fig. 19, the booklet W is supported so that the content portion thereof is gripped by the booklet grips 421 at the upper side of the film standby position P2 and the respective cover sheets are unfolded in V-shape by the cover sheet support plates 441. The bottom portion (spine portion W2) of the booklet W is supported by the bottom support plate 440, thereby preventing unintentional falling of the booklet W.

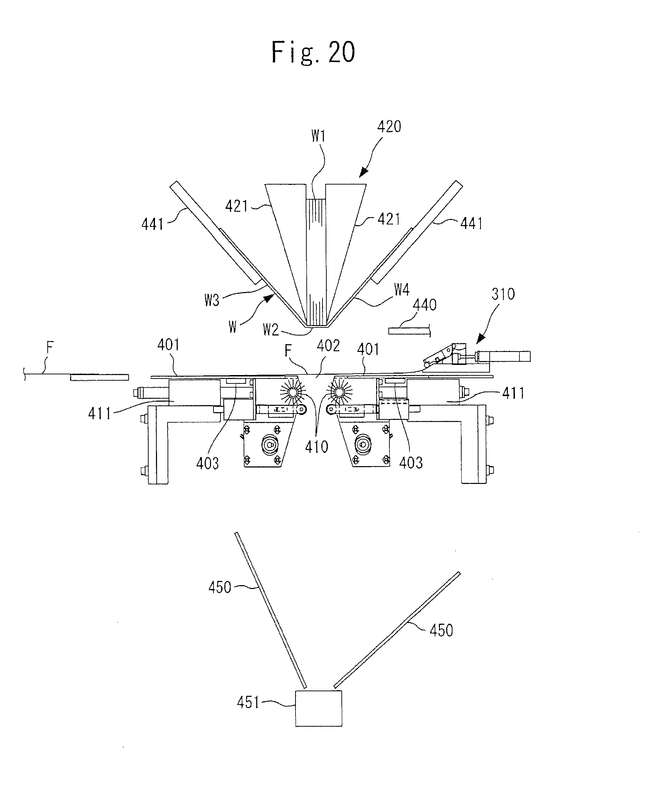

The film F is pulled out from the left side in Fig. 20 by the film grip unit 310, and disposed at the film standby position P2 as shown in Fig. 20.
At the film standby position P2, the film F is lightly sucked by the film adsorbing mechanisms 403, so that the film F is adsorbed to the arrangement boards 401.
The bottom portion support plate 440 slides in the transverse direction interlockingly with the pull-out operation of the Film F to the film standby position P2, and evacuates from the position below the booklet W.

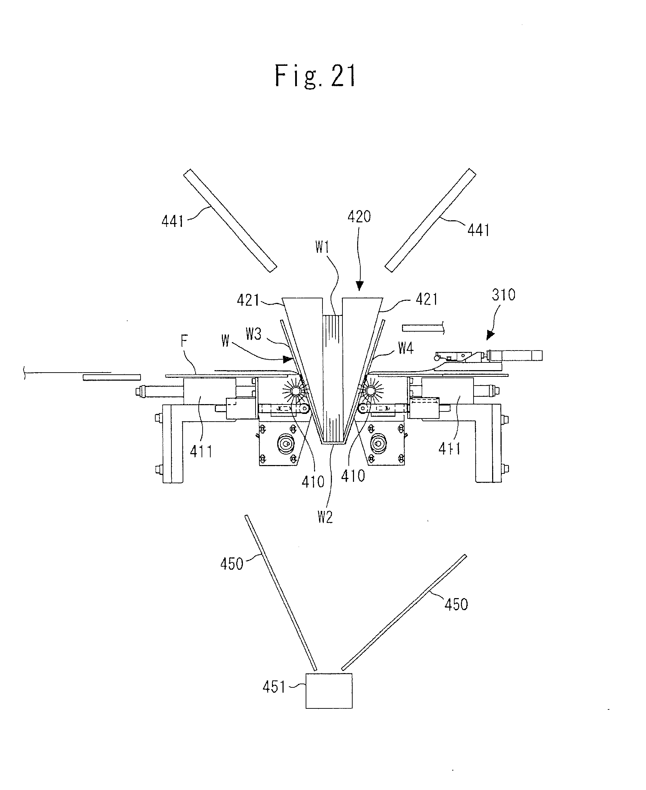

Subsequently, as shown in Fig. 21, the booklet grip 421 descends while gripping the content W1 portion of the booklet W. The spine portion W2 of the descending booklet W which is located at the bottom portion comes into contact with the film F disposed at the film standby position P2. At this time, the film F disposed at the film standby position P2 is adsorbed to the arrangement boards 401 at both the sides of the gap 402 by the film adsorbing mechanisms 403. Therefore, while the film F is pressed to the lower side of the gap 402 with the spine W2 of the descending booklet W2 at the center, whereby the film F is pulled to the gap 402 side on the arrangement boards 401, the adsorption force acts as reactive force and thus tension acts on the film F. The film F is pulled by the descending booklet W under the state that tension acts on the film F as described above, whereby the film F is gradually adhesively attached to the cover sheets of the booklet W from the spine of the booklet to the header of the booklet without slack while sliding on the arrangement boards 401.

The respective brush rollers 410 apply the press force acting from both the sides to the descending booklet W and the film F and also applies rotational force to the descending booklet W and the film F to push up them. By these external force, the film F is pressed against the respective cover sheets W3 and W4 of the booklet W, and also air bubbles remaining between the film F and each of the cover sheets W3 and W4 are pushed out, whereby appropriate adhesion of the film F can be implemented.

Here, the respective brush rollers 410 must be separated from each other while expanding the gap 402 thereof in conformity with the downward movement of the wedged booklet grips 421. Therefore, the lower portions of the cover sheets which have been subjected to the attaching processing by the brush rollers 410 push the limit switch (not shown) disposed below the brush rollers 410 so as to expand the limit switch, and the control valve for gradually evacuating air of the cylinder constituting the actuator 411 is operated on the basis of the signal from the limit switch. Accordingly, the piston of the cylinder constituting the actuator 411 is moved, and the gap 402 between the pairs of the brush rollers 410 and the arrangement boards 401 is gradually expanded.

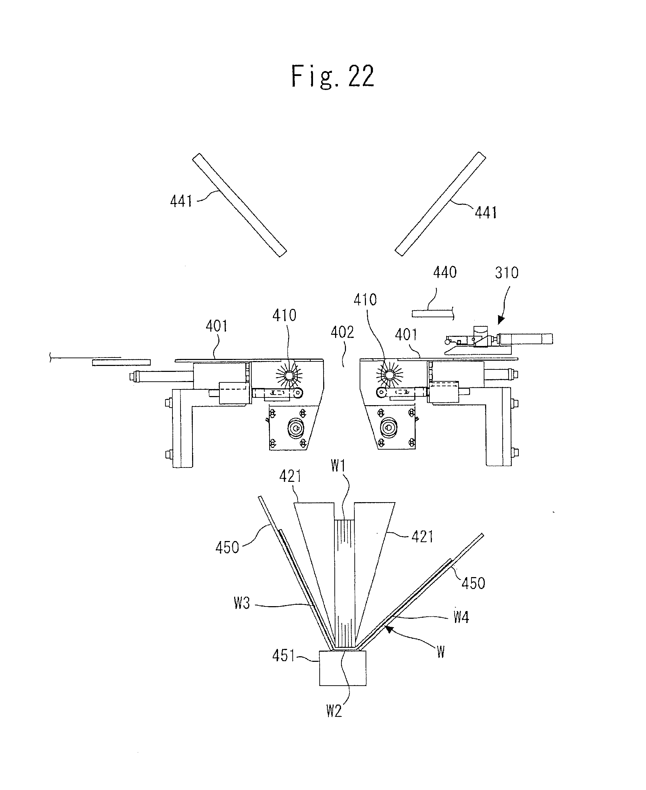

As shown in Fig. 22, the booklet W passing through the respective brush rollers 410 is downwardly moved while the content W1 thereof is gripped by the booklet grips 421, disposed inside cover sheet receiving guides 450 provided at the lower side, the respective cover sheets W3 and W4 are supported by the cover sheet receiving guides 450 while they are unfolded in V-shape, and the spine portion of the booklet W is disposed substantially in parallel to the feeding face of the belt conveyor 451. Thereafter, the pair of booklet grips 421 are released, and upwardly evacuated to the upper original point. The booklet W is fed by the belt conveyor 451.

The present invention is not limited to the embodiment described above.
For example, the present invention is not limited to the embodiment in which the film F is adhesively attached in conformity with the respective dimensions of the front cover sheet, the back cover sheet and the spine of the booklet W without protruding from the end edge.

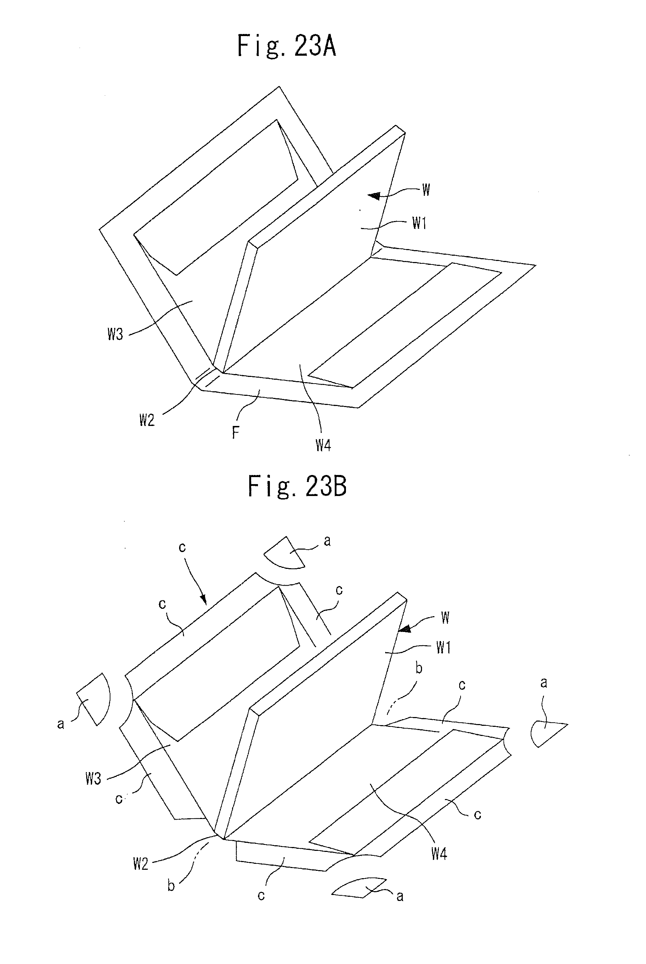

Fig. 23A is a diagram showing an embodiment in which the film F is attached to the surface of the booklet W(the front cover sheet W3, the back cover sheet W4, the spine W2) under the state that the film F protrudes from the end edge. According to the present invention, the film F may be attached to the surface of the booklet W in the embodiment shown in Fig. 23A. As described above, the film F protruding from the end edge of the booklet W may be attached while protrusion portions a and b from the corner portions and the spine portion are cut out as shown in Fig. 23B and the remaining protrusion portions care folded to the back surface side of the cover sheet.

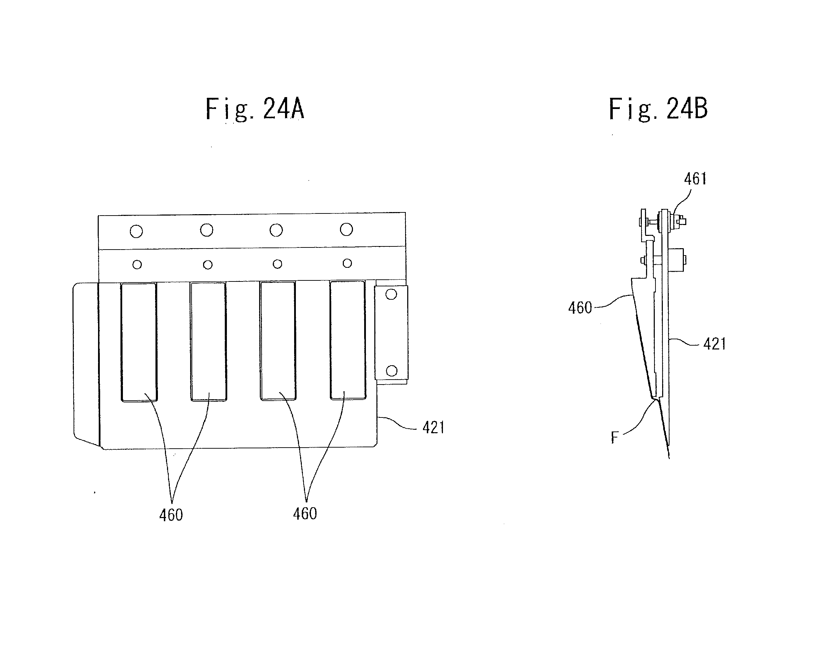

Furthermore, when the film F protrudes from the end edge of the booklet W as shown in Fig. 23A, the protrusion portions of the film F concerned could be attached to the booklet grips 421 and thus the booklet W cannot be separated from the booklet grips 421.
Therefore, as shown in Fig. 24 and Fig. 24B, the booklet grips 421 may be partially installed with movable walls 460 which freely protrude to the outside, and these movable walls 460 may be protruded from the surface by driving an actuator 461 (see Fig. 24B), whereby the protrusion portions of the film F attached to the surfaces of the booklet grips 421 can be peeled off.

Furthermore, subsequently to the film cover attaching device according to the present invention may be constructed an automation line on which a device for automatically cutting out the film protruded from the corner portions of the booklet W shown in Fig. 23B, a device for automatically cutting out the film F protruding from the spine portion of the booklet W and a device for automatically folding the protruding film F to the back side of the cover sheet of the booklet W are arranged.

## Claims

1. A film cover attaching method comprising: disposing a resin film having adhesive agent coated on one surface thereof at a predetermined film standby position, moving a booklet so that the booklet intersects with the film disposed at the film standby position to adhesively attach the film onto the surface of the booklet.

2. The film cover attaching method according to claim 1, wherein the film disposed at the film standby position is adsorbed to an arrangement board having, as a gap, a place to which the booklet is moved so that a spine of the booklet intersects with the film, the booklet is moved in a direction perpendicular to the surface of the film with the spine thereof being directed ahead while a content thereof is gripped and a cover sheet is unfolded in V-shape, the film is pressed when the booklet passes through the gap in a moving process thereof, reactive force occurs in the film against adsorption force of the arrangement board at this time, whereby the film is kept under a tension-applied state, and the film is adhesively attached to the surface of the booklet under the state.

3. The film cover attaching method according to claim 2, wherein the surface of the booklet to which the film is attached is pressed from both the sides thereof by a pair of brush rollers, and the pair of brush rollers are rotated so as to slide in contact with the booklet in an opposite direction to a moving direction of the booklet, whereby air bubbles remaining between a cover sheet of the booklet and the film attached to the cover sheet is pushed out.

4. A film cover attaching method comprising:
a film cutting step for cutting a resin filmhaving adhesive agent coated on one surface thereof on the basis of a dimension of a booklet as an attaching target;
a film arranging step for arranging the cut film at a film standby position at which a gap is provided as a place to which a spine of the booklet is moved so as to intersect; and
a step for moving the booklet so that the booklet passes through the gap while the spine of the booklet is directed ahead so as to intersect with the film arranged at the film standby position, and adhesively attaching the film to the surface of the booklet in the moving process of the booklet.

5. A film cover attaching device comprising:
a film cutting mechanism for cutting a belt-like resin filmhaving adhesive agent coated on one surface thereof on the basis of a dimension of a booklet as an attaching target;
a film standby position at which the cut film is arranged;
a gap that is provided at an intermediate portion of the film standby position and through which the booklet is passed with a spine thereof being directed ahead so as to intersect with the film standby position;
a film feeding mechanism for feeding the cut film to the film standby position; and
a booklet moving mechanism for moving the booklet so that the booklet passes through the gap with the spine thereof being directed ahead so as to intersect with the film arranged at the film standby position, and attaching the film to the surface of the booklet in the moving process.

6. The film cover attaching device according to claim 5, wherein arrangement boards each having a flat surface on which the cut film is arranged are provided at both sides of the gap, and a film adsorbing mechanism for adsorbing and holding the film to the surfaces of the arrangement boards is installed.

7. The film cover attaching device according to claim 5, further comprising a pair of brush rollers that are brought into contact with a film attached to a front cover sheet and a back cover sheet of the booklet passing through the gap while rotating.

8. The film cover attaching device according to claim 5, wherein the film cutting mechanism has a layout in which the film is cut from a side of the arrangement boards, a film delivery portion for delivering the film cut by the film cutting mechanism to the film feeding mechanism is provided, the delivery portion is provided with a filmpush-up member for pushing up one end edge of the film, and the film feeding mechanism is provided with a film grip unit for gripping one end edge of the film that is cut by the film cutting mechanism and pushed up by the film push-up member, and a driving mechanism for horizontally moving the film grip unit in a transverse direction.

9. The film cover attaching device according to claim 5, wherein the booklet moving mechanism contains a pair of booklet grips for gripping a content portion of the booklet, and an elevating mechanism for upwardly and downwardly moving the booklet grips, and the booklet is downwardly moved by the elevating mechanism from a state that the spine of the booklet faces the gap while the content of the booklet is gripped by the booklet grips.

10. The film cover attaching device according to claim 5, wherein the film cutting mechanism is configured to feed out a sheet-like film wound around a reel, separate released paper from a surface coated with the adhesive agent, and then cut the sheet-like film under tension in air which is being fed by the film feeding mechanism;
the film cutting mechanism contains a longitudinal cutting unit having a longitudinal cutting cutter for cutting the film in a travel direction of the film, and a transverse cutting unit having a transverse cutting cutter for cutting the film in a width direction of the film on the basis of a length dimension from one header of a cover sheet of a booklet as an attaching target through a spine of the booklet to the other confronting header of the booklet;
a contact pin protrudes from a longitudinal moving block which supports the longitudinal cutting cutter through a shaft and moves in the film width direction;
a stopper protrudes from a transverse moving block that supports the transverse cutting cutter through a shaft and moves in the film width direction; and
the contact pin of the longitudinal moving block for supporting through a shaft the longitudinal cutting cutter positioned to a width direction dimension of a film to be next cut comes into contact with the stopper of the transverse moving block at an evacuation position to position the transverse cutting cutter.
